# EUROPÄISCHE PATENTSCHRIFT

(11) **EP 3 845 343 B1**
(45) Veröffentlichungstag und Bekanntmachung des Hinweises auf die Patenterteilung: **31.08.2022**
(21) Anmeldenummer: 20212198.4
(22) Anmeldetag: 07.12.2020
(51) Int. Cl.: B25H 1/00

(54) **MAGNETFUSS**
MAGNETIC BASE
PIED MAGNÉTIQUE

(30) Priorität: 12.12.2019 DE 202019106916 U
(43) Veröffentlichungstag der Anmeldung: 07.07.2021
(73) Patentinhaber: C. & E. Fein GmbH, 73529 Schwäbisch Gmünd-Bargau (DE)
(72) Erfinder: Denzel, Sergej, 73529 Schwäbisch Gmünd-Bargau (DE); Scherrenbacher, Stefan, 73529 Schwäbisch Gmünd-Bargau (DE)
(74) Vertreter: Wallinger, Michael

(56) Entgegenhaltungen:
- DE-A1-102007 003 504
- DE-A1-102013 213 120
- US-A- 2 932 194
- US-A1- 2017 217 010

## Beschreibung

Die Erfindung betrifft einen Magnetfuß für eine Elektrowerkzeugmaschine, insbesondere für eine Magnetkernbohrmaschine, mit einem Grundkörper, in dem mindestens ein erster Magnet aufgenommen ist, dessen Magnetkraft zwischen einer maximalen resultierenden Haltekraft und einer minimalen resultierenden Haltekraft schaltbar ist, wobei der Magnetfuß eine erste Seite, die mit der Elektrowerkzeugmaschine koppelbar ist, und eine gegenüberliegende zweite Seite aufweist, die auf ein zu bearbeitendes Werkstück aufsetzbar ist.

Magnetfüße sind aus dem Stand der Technik bereits seit langem bekannt und werden häufig als Teil eines Bohrständers dafür verwendet, Bohrmaschinen und insbesondere Kernbohrmaschinen mittels Magnetkraft auf dem Werkstück zu befestigen, das bearbeitet werden soll. Üblicherweise werden hierfür Elektromagnete verwendet, die über die Spannungsversorgung der damit gekoppelten Elektrowerkzeugmaschine ebenfalls mit elektrischer Energie versorgt werden, was sich in der Vergangenheit auch sehr bewährt hat. Es werden aber auch schaltbare Permanentmagnete verwendet, um den zunehmenden Kundenwunsch nach Akku-betriebenen Magnetkernbohrmaschinen zu erfüllen. Ein derartiger Magnetfuß ist beispielsweise aus der US 2016/0001440 A1 bekannt. Bei diesen Magnetkernbohrmaschinen würde sich ein Magnetfuß mit einem Elektromagneten als nachteilig erweisen, da dann die Laufzeit der Akkumulatoren nachteilig beeinflusst würde. Der Oberbegriff des Anspruches 1 ist aus der US2017/217010A1 bekannt. Andere Beispiele sind in der DE102007003504A1 oder US2932194A dargestellt.

Bei Magnetfüßen, die zur Befestigung von Magnetkernbohrmaschinen auf den jeweiligen Werkstücken verwendet werden, besteht jedoch das Problem, dass die Haltekraft sehr stark von der Planheit der Oberfläche abhängt, die im Kontakt mit dem Werkstück steht, das bearbeitet werden soll. Wenn die Position der Magnetkernbohrmaschine auf dem zu bearbeitenden Werkstück verändert werden soll, beispielsweise zur Feinjustierung aber auch für das Versetzen der Magnetkernbohrmaschine zwischen den Bohrvorgängen einzelner Löcher, so erfolgt dies aber nicht dadurch, dass die Magnetkernbohrmaschine zunächst vom Werkstück abgenommen und auf die neue Position gesetzt wird, sondern üblicherweise dadurch, dass die resultierende Magnetkraft soweit reduziert wird, dass die Magnetkernbohrmaschine zwar noch auf dem Werkstück hält, vom Nutzer aber manuell auf der Oberfläche des Werkstücks verschoben werden kann. Bei diesem Verschieben besteht dann jedoch das Problem, dass sich die Unterseite der Magnetfüße durch Abrieb abnutzt, bzw.verkratzt und beschädigt wird, da hier häufig Späne zwischen das Werkstück und den Magnetfuß gelangen. Durch diesen Abrieb bzw. durch dieses Verkratzen besteht allerdings das Problem, dass hierdurch lokal Luftspalte zwischen dem Werkstück und dem Magnetfuß entstehen, wodurch der Wert der resultierenden maximalen Magnetkraft deutlich reduziert wird. Dies führt dann aber dazu, dass der Nutzer die Magnetkernbohrmaschine nicht mehr sicher verwenden kann und zum Service an den Hersteller einschicken muss. Hierbei ist es aber für den Nutzer häufig schwer zu erkennen, ob denn die resultierende Haltekraft noch ausreichend ist, die Magnetkernbohrmaschine sicher verwenden zu können, oder ob die Magnetkernbohrmaschine einer Wartung unterzogen werden muss.

Der vorliegenden Erfindung liegt daher die Aufgabe zugrunde, einen Magnetfuß bereitzustellen, der die oben genannten Nachteile reduziert.

Diese Aufgabe wird gemäß der Erfindung bei einem Magnetfuß der eingangs genannten Art dadurch gelöst, dass der zweiten Seite mindestens ein Verschleißindikator zugeordnet ist.

Hierdurch wird es für den Nutzer des erfindungsgemäßen Magnetfußes erleichtert, den Verschleiß der mit dem Werkstück in Kontakt stehenden Seite des Magnetfußes zu erfassen und damit die Notwendigkeit zu erkennen, einen Service des Magnetfußes oder der Magnetkernbohrmaschine durchzuführen und/oder den Magnetfuß zu ersetzen.

Als vorteilhaft hat es sich hierbei auch gezeigt, wenn der mindestens eine Verschleißindikator mehrfach vorgesehen ist. Hierdurch wird der Verschleiß nicht nur an einer Stelle lokal überwacht, sondern es ist möglich, diesen an mehreren Stellen zu überwachen, wodurch sich die Abnutzung oder der Verschleiß leichter überwachen lässt. In diesem Zusammenhang hat es sich dann auch besonders bewährt, wenn die Anzahl der Verschleißindikatoren vorzugsweise 2 oder mehr, bevorzugt 4 oder mehr und besonders bevorzugt 6 oder mehr, und weiter vorzugsweise 14 oder weniger, bevorzugt 12 oder weniger und besonders bevorzugt 10 oder weniger und ganz besonders bevorzugt 8 beträgt.

Als vorteilhaft hat es sich auch erwiesen, wenn der mindestens eine Verschleißindikator eine Verschleißbeständigkeit aufweist, die gleich oder geringer ist, als die auf dem Werkstück aufsetzbare Seite des Magnetfußes. Hierdurch wird sichergestellt, dass das den Verschleißindikator umgebende Material des Magnetfußes höchstens so stark verschleißt, wie der Verschleißindikator selbst. In anderen Worten bedeutet dies, dass dadurch letztlich erreicht wird, dass der Verschleißindikator mindestens im gleichen Maße abgenutzt wird wie der Magnetfuß selbst, es für den Nutzer also klar erkennbar ist, ob der Magnetfuß noch weiterverwendet werden kann oder dem Service zugeführt werden muss.

Der Fertigungsaufwand lässt sich insbesondere dann reduzieren, wenn der mindestens eine Verschleißindikator als eine Vertiefung ausgebildet ist. Diese Vertiefung kann besonders einfach, beispielsweise mittels eines spanenden Verfahrens, in den Magnetfuß eingearbeitet werden. Zudem wird durch die Vertiefung dem Nutzer eine einfache Möglichkeit gegeben, den Verschleiß zu beurteilen, da die Tiefe der Vertiefung mit zunehmendem Verschleiß abnimmt. Sobald der Verschleißindikator für den Nutzer nicht mehr zu erkennen ist, ist dies für den Nutzer das Zeichen, den Magnetfuß auszutauschen. Um hierbei noch die Gefahr eines Eindringens von Spänen in den Verschleißindikator zu reduzieren hat es sich in diesem Zusammenhang dann aber auch bewährt, wenn die Vertiefung vergossen ist. Dies kann beispielsweise durch ein Metall, das eine andere Färbung aufweist, oder beispielsweise auch mit Kunststoff oder einem Harz erfolgen. Hierdurch wird dann insbesondere eine im Ausgangszustand plane Oberfläche geschaffen. Wird der als Vertiefung gebildete Verschleißindikator durch das Ausgießen noch farblich von dem umgebenden Magnetfuß abgehoben, so wird hierdurch dem Nutzer eine einfache Art und Weise geschaffen, den Grad des Verschleißes zu identifizieren.

Als besonders vorteilhaft hat es sich auch erwiesen, wenn die Form der Verschleißindikatoren ausgewählt ist aus einer Gruppe, die Ringe, Striche, Kreisflächen und Ellipsen umfasst. Insbesondere diese Formen lassen sich besonders einfach herstellen, wodurch die Herstellungskosten weiter reduziert werden können. Die Formen können dabei auch miteinander kombiniert werden.

Bewährt hat es sich zudem auch, wenn der mindestens eine Verschleißindikator am Randbereich des Magnetfußes angeordnet ist. Da insbesondere die Randbereiche der Magnetfüße durch das manuelle Verschieben der Magnetkernbohrmaschine starkem Verschleiß unterliegen, wird hierdurch eine gute Möglichkeit geschaffen, den Verschleiß lokal an den Stellen zu erfassen, an denen der Verschleiß auch auftritt. In diesem Zusammenhang ist es im Rahmen der Erfindung insbesondere vorgesehen, dass der Abstand des Verschleißindikators vom Rand des Magnetfußes zwischen 5% und 10% der Länge des Magnetfußes beträgt. Unter Rand ist dabei eine den Magnetfuß begrenzende Seitenkante des Magnetfußes zu verstehen.

Als günstig hat es sich auch gezeigt, wenn der mindestens eine Verschleißindikator auf einer Verschleißplatte ausgebildet ist, die lösbar an dem Grundkörper befestigt ist. Hierdurch ist es möglich, bei einem verschlissenen Magnetfuß lediglich die Verschleißplatte auszutauschen, wodurch sich der Serviceaufwand und die Kosten für den Nutzer deutlich reduzieren. So musste in der Vergangenheit stets der komplette Magnetfuß ausgewechselt werden, wenn die Oberfläche des Magnetfußes verschließen war. Zudem ergibt sich hieraus der Vorteil, dass der Magnetfuß an unterschiedliche Werkstückkonturen angepasst werden kann. Im Rahmen der Erfindung ist es aber auch vorgesehen, die Verschleißplatte ohne Verschleißindikatoren auszubilden.

Der Service lässt sich auch dadurch reduzieren, dass die Verschleißplatte mit dem Grundkörper verschraubt ist, wobei es sich in diesem Zusammenhang auch bewährt hat, wenn die Verschraubung von der ersten Seite des Magnetfußes her erfolgt. Hierdurch wird sichergestellt, dass die Verschraubung der Verschleißplatte von der Seite her erfolgt, die nicht im Kontakt mit dem Werkstück steht, das bearbeitet werden soll. Hierdurch wird dann erreicht, dass sich die Löcher für die Aufnahme der Schrauben, mit denen die Verschleißplatte an dem Magnetfuß befestigt werden, nicht mit Spänen zusetzen können. Im Rahmen der Erfindung ist es hierbei aber auch vorgesehen, dass die Verschraubung von der Seite erfolgt, die im Kontakt mit dem Werkstück steht oder von einer zu dieser Seite senkrecht ausgerichteten Seitenfläche des Magnetfußes. Hierdurch ist es dann insbesondere möglich, die Verschleißplatte vereinfacht an verschiedene Geometrien von Werkstücken anzupassen.

Als günstig hat es sich auch erwiesen, wenn eine von dem Grundkörper wegweisende Seite der Verschleißplatte eine im Wesentlichen plane Oberfläche aufweist. Dies führt dazu, dass der Magnetfuß auf einem flachen Werkstück, beispielsweise einem Metallträger gut aufliegt und damit die Gefahr von Luftspalten zwischen dem Werkstück und dem Magnetfuß reduziert wird, was sich dabei positiv auf die Betriebssicherheit des Magnetfußes auswirkt. Alternativ ist es im Rahmen der Erfindung aber auch vorgesehen, dass in der von dem Grundkörper wegweisenden Seite der Verschleißplatte eine Nut ausgebildet ist. Hierdurch kann der Magnetfuß auch auf Werkstücken verwendet werden, die nicht plan sind, zum Beispiel auf Rohren, oder ähnlichem.

Als besonders vorteilhaft hat es sich dabei auch erwiesen, wenn die Nut eine prismatische Form aufweist. Hierdurch kann auf eine genaue Nachbildung der Kontur des nicht planen Werkstücks verzichtet werden. Im Rahmen der Erfindung ist es aber auch besonders bevorzugt, wenn die Nut eine konkave Form aufweist.

In diesem Zusammenhang hat es sich weiterhin als günstig erwiesen, wenn die Nut symmetrisch zu einer Längsachse des Grundkörpers ausgerichtet ist. Hierdurch wird die Fläche maximiert, die im Kontakt mit dem Werkstück steht, was sich vorteilhaft auf den Wert der maximal wirkenden Haltekraft auswirkt.

Bewährt hat es sich außerdem auch, wenn der mindestens eine Verschleißindikator als ein Sensorelement gebildet ist, das in dem Magnetfuß aufgenommen ist. Hierdurch lässt sich der Verschleiß des Magnetfußes überwachen und dem Nutzer ein Signal ausgeben, wenn der Verschleiß eine Verschleißgrenze erreicht. Das Sensorelement kann dabei beispielsweise so ausgebildet sein, dass dieses erst bei einer Unterschreitung eines Verschleißgrenzwertes ein Sensorsignal erzeugt, das dann im Magnetfuß oder in einer mit dem Magnetfuß verbundenen Magnetkernbohrmaschine ausgewertet wird. Alternativ kann durch das Sensorelement auch der graduelle Verschleißverlauf erfasst werden. Hierdurch wird dem Nutzer die Möglichkeit gegeben, den Verschleiß kontinuierlich zu erfassen.

In diesem Zusammenhang hat es sich dann weiterhin als günstig erwiesen, wenn eine Abschaltvorrichtung vorgesehen ist, die bei einer Überschreitung einer vorgebbaren Verschleißgrenze die Elektrowerkzeugmaschine deaktiviert. Hierdurch wird dann sichergestellt, dass die Elektrowerkzeugmaschine, die mit dem erfindungsgemäßen Magnetfuß verbunden ist, nur verwendet werden kann, wenn der Verschleiß des Magnetfußes unterhalb der Verschleißgrenze liegt.

Gegenstand der vorliegenden Erfindung ist außerdem eine Elektrowerkzeugmaschine mit einem Magnetfuß nach einem der Ansprüche 1 bis 17.

Im Folgenden wird die Erfindung an mehreren in den Zeichnungen dargestellten Ausführungsbeispielen näher erläutert; es zeigen:
- Fig. 1: eine perspektivische Ansicht von unten auf eine erste Ausführungsform eines Magnetfußes,
- Fig. 2: eine perspektivische Ansicht von unten auf eine zweite Ausführungsform eines Magnetfußes mit einer Verschleißplatte,
- Fig. 3: eine perspektivische Ansicht von unten auf eine dritte Ausführungsform eines Magnetfußes mit einer Nut,
- Fig. 4: eine Detailansicht einer ersten Variante der Verschleißindikatoren,
- Fig. 5: eine Detailansicht einer zweiten Variante der Verschleißindikatoren,
- Fig. 6: eine Detailansicht einer dritten Variante der Verschleißindikatoren,
- Fig. 7: eine Detailansicht einer vierten Variante der Verschleißindikatoren,
- Fig. 8: eine Detailansicht einer fünften Variante der Verschleißindikatoren, und
- Fig. 9: eine Schnittansicht entlang eines Querschnitts durch eine weitere Ausführungsform des Magnetfußes.

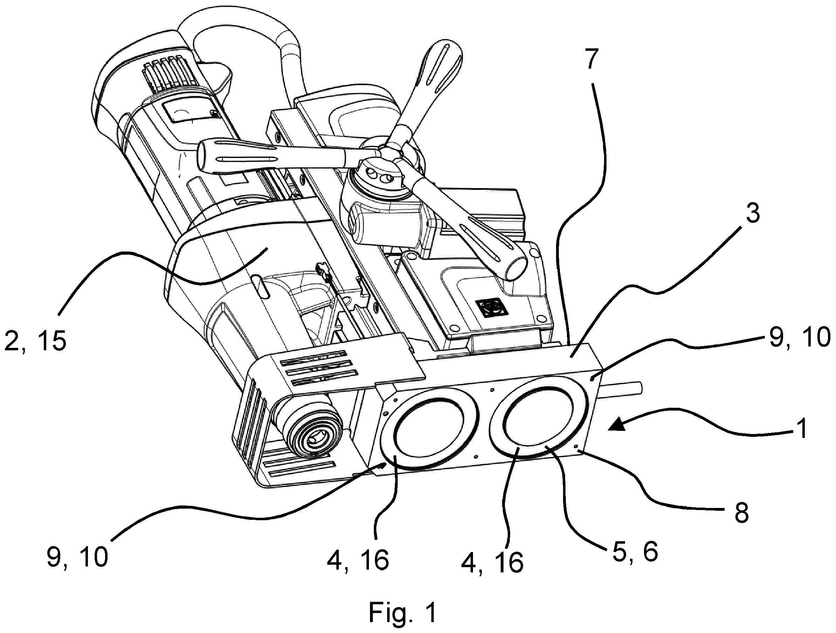

Figur 1 zeigt in einer perspektivischen Ansicht von unten eine erste Ausführungsform eines Magnetfußes 1, der an einer Elektrowerkzeugmaschine 15, nämlich an einer Magnetkernbohrmaschine 2 befestigt ist. Der Magnetfuß 1 weist dabei einen Grundkörper 3 auf, in dem in dem gezeigten Ausführungsbeispiel zwei Magnete 16 aufgenommen sind, die als Magnetspulen 4 ausgebildet sind und die jeweils einen Elektromagneten bilden. Durch die angelegte Spannung kann deren Magnetkraft zwischen einer maximalen resultierenden Haltekraft und einer minimalen resultierenden Haltekraft geschaltet werden. Die Magnetspulen 4 sind dabei jeweils in einer ringförmigen Aussparung 5, die in dem Grundkörper 3 ausgebildet ist und mit einer Vergussmasse 6 vergossen ist. Der Magnetfuß 1 weist dabei eine erste Seite 7 auf, die mit der Magnetkernbohrmaschine 2 gekoppelt ist, und eine gegenüberliegende zweite Seite 8, die auf ein zu bearbeitendes Werkstück aufsetzbar ist. Auf dieser zweiten Seite 8 sind mehrere Verschleißindikatoren 9 ausgebildet, die den Verschleiß des Magnetfußes 1 anzeigen. In dem gezeigten Ausführungsbeispiel beträgt die Anzahl dieser Verschleißindikatoren 9 genau 6. Im Rahmen der Erfindung beträgt die Anzahl aber vorzugsweise 2 oder mehr, bevorzugt 4 oder mehr und besonders bevorzugt 6 oder mehr, und weiter vorzugsweise 14 oder weniger, bevorzugt 12 oder weniger und besonders bevorzugt 10 oder weniger und ganz besonders bevorzugt 8. Die Verschleißindikatoren 9 sind dabei als Vertiefungen 10 gebildet und weisen eine Kreisflächenform auf. Um ein Eindringen von Spänen in die Verschleißindikatoren 9 zu verhindern, sind die Vertiefungen 10 vergossen. Das Material, das zum Vergießen verwendet wird, weist dabei eine Verschleißbeständigkeit auf, die gleich oder geringer ist als die auf dem Werkstück aufsetzbare zweite Seite 8 des Magnetfußes 1. Hierdurch wird dann erreicht, dass der Verschleiß der Verschleißindikatoren 9 mindestens so groß ist wie der Verschleiß der zweiten Seite 8 des Magnetfußes 1, der auf dem zu bearbeitenden Werkstück aufgesetzt wird. Wie der Figur 1 weiterhin entnommen werden kann, sind die Verschleißindikatoren 9 am Randbereich des Magnetfußes 1 angeordnet, da in diesem Bereich der Verschleiß erfahrungsgemäß am höchsten ist. In dem gezeigten Ausführungsbeispiel beträgt der Abstand der Verschleißindikatoren 9 zum Rand des Magnetfußes rund 5 % der Länge des Magnetfußes 1. Wenn nun der Nutzer feststellt, dass die Verschleißindikatoren 9 verschlissen sind, so muss er daraufhin den Magnetfuß 1 oder die komplette Magnetkernbohrmaschine 2 dem Service zuführen.

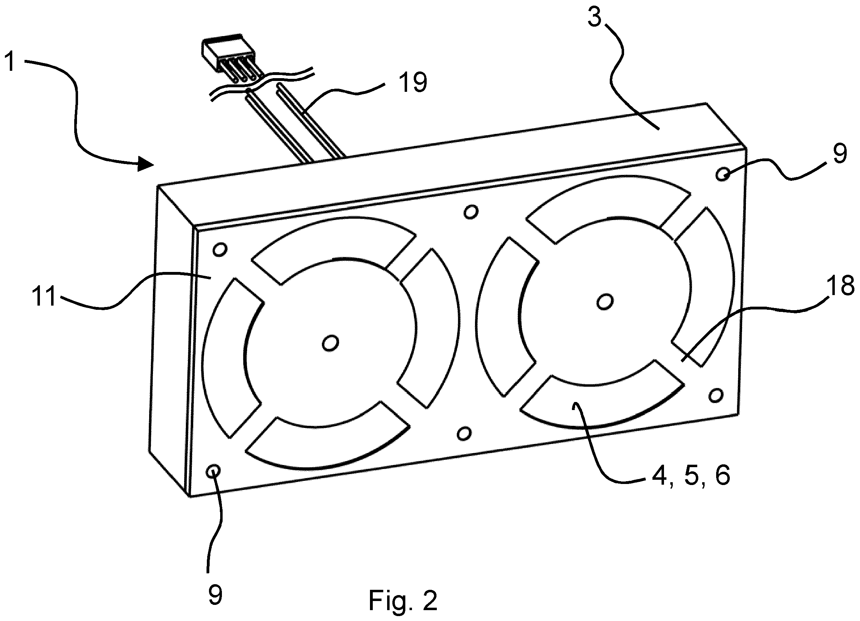

Figur 2 zeigt ebenfalls in einer perspektivischen Ansicht von unten eine zweite Ausführungsform des erfindungsgemäßen Magnetfußes 1. Bei dieser Ausführungsform sind die insgesamt acht Verschleißindikatoren 9 in einer Verschleißplatte 11 ausgebildet, die lösbar mit dem Grundkörper 3 verschraubt ist. Die Verschraubung erfolgt dabei von der ersten Seite 7 des Magnetfußes 1 her, also von der Seite, an der die Magnetkernbohrmaschine 2 befestigbar ist. Die von dem Grundkörper 3 wegweisende Seite der Verschleißplatte 11 weist dabei eine im Wesentlichen plane Oberfläche auf und eignet sich deshalb besonders für die Befestigung des Magnetfußes 1 auf einem ebenfalls planen Werkstück. Die Verschleißplatte 11 ist dabei so ausgebildet, dass die die Magnetspulen 4 aufnehmenden Aussparungen 5, die mit der Vergussmasse 6 vergossen sind, durch Stege 18 teilweise überdeckt sind. Der Figur 2 ist weiterhin auch zu entnehmen, dass ein unterbrochen dargestellter elektrischer Steckverbinder 19 auf der ersten Seite 7 des Magnetfußes 1 ausgebildet ist, mit der es möglich ist, diesen mit der Steuerung einer Magnetkernbohrmaschine 2 zu koppeln.

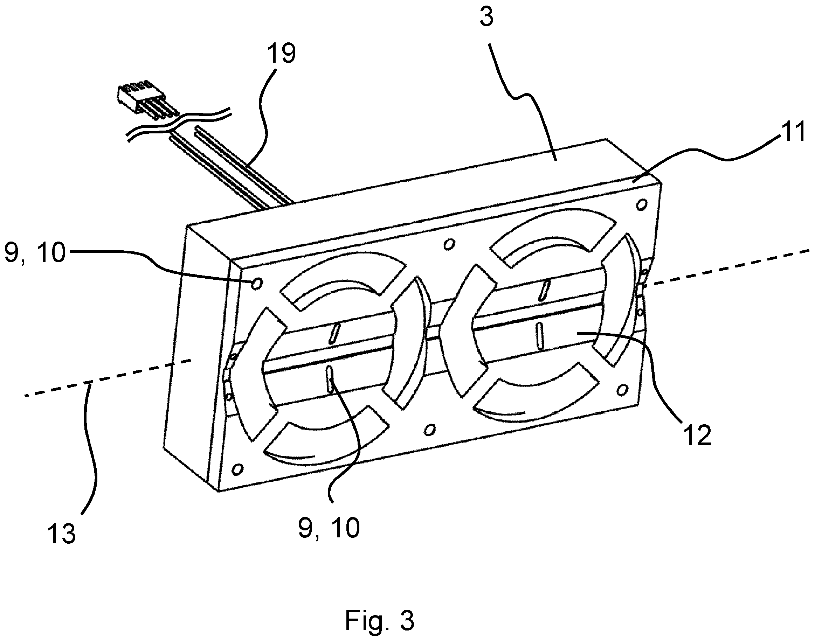

Bei der in der Figur 3 dargestellten perspektivischen Ansicht der dritten Ausführungsform des erfindungsgemäßen Magnetfußes 1 von unten kann entnommen werden, dass auch in diesem Beispiel die Verschleißindikatoren 9 auf einer mit dem Grundkörper 3 verschraubten Verschleißplatte 11 angebracht sind. In der von dem Grundkörper 3 wegweisenden Seite der Verschleißplatte 11 ist bei dieser Ausführungsform eine Nut 12 ausgebildet. Diese Nut 12 weist in dem gezeigten Ausführungsbeispiel eine prismatische Form auf, mit der es möglich ist, den Magnetfuß 1 auch auf solchen Werkstücken zu befestigen, die eine nicht plane Oberfläche aufweisen, wie beispielsweise auf Rohren. Innerhalb dieser Nut 12 sind auch Verschleißindikatoren 9 ausgebildet. Diese Nut 12 ist dabei symmetrisch zu einer Längsachse 13 des Grundkörpers 3 ausgerichtet. Durch die Verschraubbarkeit der Verschleißplatte 11 ist es für den Nutzer möglich, den Magnetfuß 1 an verschiedene Oberflächenkonturen anzupassen.

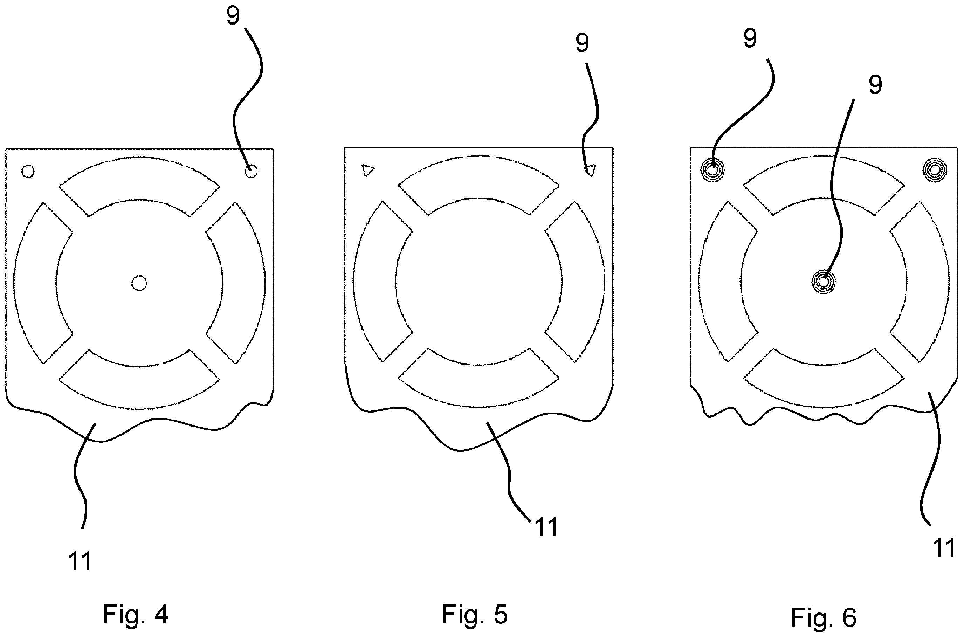

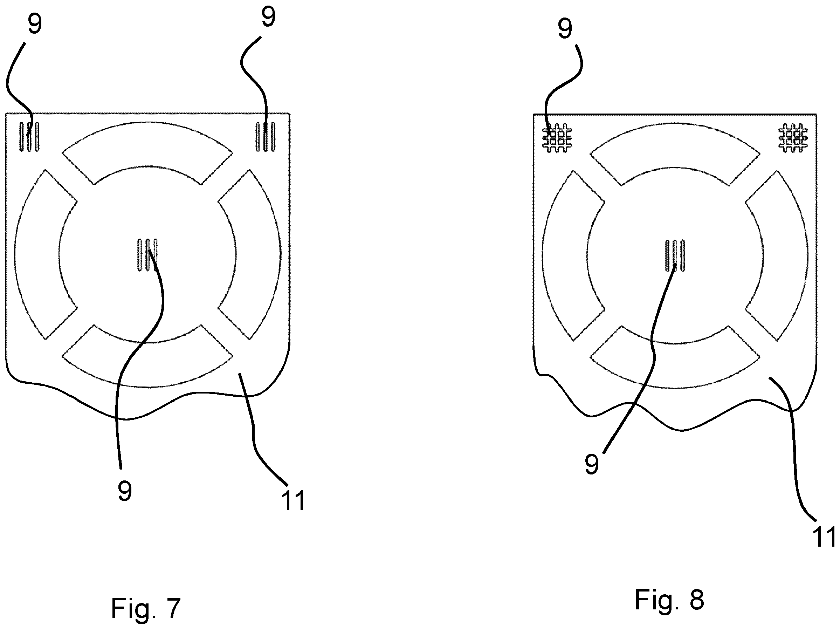

In den Figuren 4 bis 8 sind in Detailansichten verschiedene Formen von Verschleißindikatoren 9 dargestellt, die sich hinsichtlich ihrer Gestaltung unterscheiden. Die in der Figur 4 dargestellten Verschleißindikatoren 9 weisen eine kreisscheibenförmige Gestaltung auf, während die in der Figur 5 dargestellten Verschleißindikatoren 9 jeweils eine dreieckige Form aufweisen. Die in der Figur 6 dargestellten Verschleißindikatoren 9 sind hingegen jeweils aus konzentrischen Ringen unterschiedlicher Radien gebildet. Bei den Verschleißindikatoren 9, die in der Figur 7 verwendet wurden, handelt es sich jeweils um mehrere parallele Striche, während in der Ausführungsform gemäß der Figur 8, die Verschleißindikatoren 9 letztlich als senkrecht zueinander angeordnete Striche ausgeführt sind.

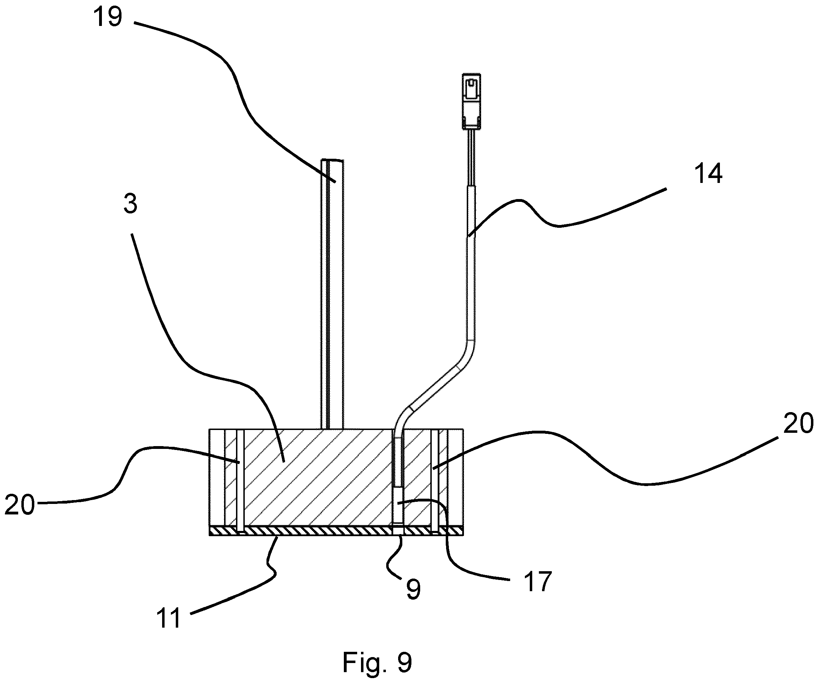

Figur 9 zeigt in einer Schnittansicht einen Querschnitt durch den Magnetfuß 1. Diese Schnittansicht zeigt dabei insbesondere, dass in dem gezeigten Ausführungsbeispiel mindestens einer der Verschleißindikatoren 9 als ein Sensorelement 14 gebildet ist. Dieses wird von der zweiten Seite 8 her in den Grundköper 3 des Magnetfußes 1 in eine entsprechende Aufnahme 17 eingesetzt. Hierdurch ist es möglich, bei einer Überschreitung einer vorgebbaren Verschleißgrenze die Magnetkernbohrmaschine 2 mittels einer Abschaltvorrichtung, die mit der Steuerung der Magnetkernbohrmaschine 2 verbunden ist, zu deaktivieren. Die Aufnahme 17 ist von der zweiten Seite 8 des Grundkörpers 3 von der Verschleißplatte 11 abgeschlossen. Zudem sind in der Figur 9 auch Schraubaufnahmen 20 zu erkennen, in denen Schrauben aufgenommen werden können, um den Grundkörper 3 mit der Verschleißplatte 11 zu verschrauben.

### Bezugszeichenliste

- 1: Magnetfuß
- 2: Magnetkernbohrmaschine
- 3: Grundkörper
- 4: Magnetspule
- 5: Aussparung
- 6: Vergussmasse
- 7: erste Seite
- 8: zweite Seite
- 9: Verschleißindikator
- 10: Vertiefung
- 11: Verschleißplatte
- 12: Nut
- 13: Längsachse
- 14: Sensorelement
- 15: Elektrowerkzeugmaschine
- 16: Magnet
- 17: Aufnahme
- 18: Steg
- 19: Steckverbinder
- 20: Schraubaufnahme

## Patentansprüche

1. Magnetfuß (1) für eine Elektrowerkzeugmaschine (15), insbesondere für eine Magnetkernbohrmaschine (2), mit einem Grundkörper (3), in dem mindestens ein erster Magnet (16) aufgenommen ist, dessen Magnetkraft zwischen einer maximalen resultierenden Haltekraft und einer minimalen resultierenden Haltekraft schaltbar ist, wobei der Magnetfuß (1) eine erste Seite (7), die mit der Elektrowerkzeugmaschine (15) koppelbar ist, und eine gegenüberliegende zweite Seite (8) aufweist, die auf ein zu bearbeitendes Werkstück aufsetzbar ist, **dadurch gekennzeichnet, dass** der zweiten Seite (8) mindestens ein Verschleißindikator (9) zugeordnet ist.

2. Magnetfuß (1) nach Anspruch 1, **dadurch gekennzeichnet, dass** die Anzahl der Verschleißindikatoren (9) vorzugsweise 2 oder mehr, bevorzugt 4 oder mehr und besonders bevorzugt 6 oder mehr, und weiter vorzugsweise 14 oder weniger, bevorzugt 12 oder weniger und besonders bevorzugt 10 oder weniger und ganz besonders bevorzugt 8 beträgt.

3. Magnetfuß (1) nach Anspruch 1 oder 2, **dadurch gekennzeichnet, dass** der mindestens eine Verschleißindikator (9) eine Verschleißbeständigkeit aufweist, die gleich oder geringer ist, als die auf dem Werkstück aufsetzbare zweite Seite (8) des Magnetfußes (1).

4. Magnetfuß (1) nach einem der Ansprüche 1 bis 3, **dadurch gekennzeichnet, dass** der mindestens eine Verschleißindikator (9) als eine Vertiefung (10) ausgebildet ist.

5. Magnetfuß (1) nach Anspruch 4, **dadurch gekennzeichnet, dass** die Vertiefung (10) vergossen ist.

6. Magnetfuß (1) nach einem der Ansprüche 1 bis 5, **dadurch gekennzeichnet, dass** die Form der Verschleißindikatoren (9) ausgewählt ist aus einer Gruppe, die Ringe, Striche, Kreisflächen und Ellipsen umfasst.

7. Magnetfuß (1) nach einem der Ansprüche 1 bis 6, **dadurch gekennzeichnet, dass** der mindestens eine Verschleißindikator (9) am Randbereich des Magnetfußes (1) angeordnet ist.

8. Magnetfuß (1) nach einem der Ansprüche 1 bis 7, **dadurch gekennzeichnet, dass** der mindestens eine Verschleißindikator (9) auf einer Verschleißplatte (11) ausgebildet ist, die lösbar an dem Grundkörper (3) befestigt ist.

9. Magnetfuß (1) nach Anspruch 8, **dadurch gekennzeichnet, dass** die Verschleißplatte (11) mit dem Grundkörper (3) verschraubt ist, wobei die Verschraubung bevorzugt von der ersten Seite (7) des Magnetfußes (1) her erfolgt.

10. Magnetfuß (1) nach einem der Ansprüche 8 oder 9, **dadurch gekennzeichnet, dass** eine von dem Grundkörper (3) wegweisende Seite der Verschleißplatte (11) eine im Wesentlichen plane Oberfläche aufweist.

11. Magnetfuß (1) nach einem der Ansprüche 8 bis 10, **dadurch gekennzeichnet, dass** in der von dem Grundkörper (3) wegweisenden Seite der Verschleißplatte (11) eine Nut (12) ausgebildet ist, wobei die Nut (12) bevorzugt eine prismatische Form aufweist.

12. Magnetfuß (1) nach Anspruch 11, **dadurch gekennzeichnet, dass** die Nut (12) symmetrisch zu einer Längsachse (13) des Grundkörpers (3) ausgerichtet ist.

13. Magnetfuß (1) nach einem der Ansprüche 1 bis 12, **dadurch gekennzeichnet, dass** der mindestens eine Verschleißindikator (9) als ein Sensorelement (14) gebildet ist, das in dem Magnetfuß (1) aufgenommen ist.

14. Magnetfuß (1) nach Anspruch 13, **dadurch gekennzeichnet, dass** eine Abschaltvorrichtung vorgesehen ist, die bei einer Überschreitung einer vorgebbaren Verschleißgrenze die Elektrowerkzeugmaschine (15) deaktiviert.

15. Elektrowerkzeugmaschine (15) mit einem Magnetfuß (1) nach einem der Ansprüche 1 bis 14.

## Claims

1. Magnetic base (1) for a power tool (15), in particular for a magnetic core drilling machine (2), with a base body (3) in which at least one first magnet (16) is accommodated, the magnetic force of which is switchable between a maximum resulting holding force and a minimum resulting holding force, wherein the magnetic base (1) comprises a first side (7) which is connectable to the power tool (15), and an opposite second side (8) which is placeable on a workpiece to be machined, **characterized in that** at least one wear indicator (9) is associated to the second side (8).

2. Magnetic base (1) according to claim 1, **characterized in that** the number of wear indicators (9) is preferably 2 or more, preferably 4 or more and particularly preferably 6 or more, and more particularly 14 or less, preferably 12 or less and particularly preferably 10 or less and most preferably 8.

3. Magnetic base (1) according to claim 1 or 2, **characterized in that** the at least one wear indicator (9) comprises a wear resistance that is the same as or less than the second side (8) that is placeable on the workpiece of the magnetic base (1).

4. Magnetic base (1) according to any one of claims 1 to 3, **characterized in that** the at least one wear indicator (9) is adapted as a recess (10).

5. Magnetic base (1) according to claim 4, **characterized in that** the recess (10) is casted.

6. Magnetic base (1) according to any one of claims 1 to 5, **characterized in that** the shape of the wear indicators (9) is selected from a group comprising rings, lines, circular areas and ellipses.

7. Magnetic base (1) according to any one of claims 1 to 6, **characterized in that** the at least one wear indicator (9) is arranged on the edge region of the magnetic base (1).

8. Magnetic base (1) according to any one of claims 1 to 7, **characterized in that** the at least one wear indicator (9) is formed on a wear plate (11) which is detachably attached to the base body (3).

9. Magnetic base (1) according to claim 8, **characterized in that** the wear plate (11) is screwed to the base body (3), wherein the screwing preferably takes place from the first side (7) of the magnetic base (1).

10. Magnetic base (1) according to any one of claims 8 or 9, **characterized in that** a side of the wear plate (11) facing away of the base body (3) comprises a substantially planar surface.

11. Magnetic base (1) according to any one of claims 8 to 10, **characterized in that** in the side of the wear plate (11) facing away from the base body (3) a groove (12) is formed, wherein the groove (12) preferably comprises a prismatic shape.

12. Magnetic base (1) according to claim 11, **characterized in that** the groove (12) is aligned symmetrically to a longitudinal axis (13) of the base body (3).

13. Magnetic base (1) according to any one of claims 1 to 12, **characterized in that** the at least one wear indicator (9) is formed as a sensor element (14) which is accommodated in the magnetic base (1).

14. Magnetic base (1) according to claim 13, **characterized in that** a switch-off device is provided which deactivates the electric power tool (15) when a predeterminable wear limit is exceeded.

15. Power tool (15) with a magnetic base (1) according to any one of claims 1 to 14.

## Revendications

1. Pied magnétique (1) pour une machine-outil électrique (15), en particulier pour une carotteuse magnétique (2), avec un corps de base (3), dans lequel est logé au moins un premier aimant (16), dont la force magnétique peut être commutée entre une force de maintien résultante maximale et une force de maintien résultante minimale, dans lequel le pied magnétique (1) présente un premier côté (7), qui peut être couplé à la machine-outil électrique (15), et un deuxième côté opposé (8), qui peut être placé sur une pièce à usiner, **caractérisé en ce qu'**au moins un indicateur d'usure (9) est associé au deuxième côté (8).

2. Pied magnétique (1) selon la revendication 1, **caractérisé en ce que** le nombre des indicateurs d'usure (9) est de préférence de 2 ou plus, de manière préférée de 4 ou plus et de manière particulièrement préférée de 6 ou plus, et de préférence par ailleurs de 14 ou moins, de manière préférée de 12 ou moins, et de manière particulièrement préférée de 10 ou moins, et de manière tout particulièrement préférée de 8.

3. Pied magnétique (1) selon la revendication 1 ou 2, **caractérisé en ce que** l'au moins un indicateur d'usure (9) présente une résistance à l'usure, qui est identique ou inférieure à celle du deuxième côté (8), pouvant être placé sur la pièce, du pied magnétique (1).

4. Pied magnétique (1) selon l'une quelconque des revendications 1 à 3, **caractérisé en ce que** l'au moins un indicateur d'usure (9) est réalisé en tant qu'un renfoncement (10).

5. Pied magnétique (1) selon la revendication 4, **caractérisé en ce que** le renfoncement (10) est scellé.

6. Pied magnétique (1) selon l'une quelconque des revendications 1 à 5, **caractérisé en ce que** la forme des indicateurs d'usure (9) est choisie parmi un groupe, qui comprend des boucles, des traits, de surfaces circulaires et des ellipses.

7. Pied magnétique (1) selon l'une quelconque des revendications 1 à 6, **caractérisé en ce que** l'au moins un indicateur d'usure (9) est disposé sur la zone de bord du pied magnétique (1).

8. Pied magnétique (1) selon l'une quelconque des revendications 1 à 7, **caractérisé en ce que** l'au moins un indicateur d'usure (9) est réalisé sur une plaque d'usure (11), qui est fixée de manière amovible sur le corps de base (3).

9. Pied magnétique (1) selon la revendication 8, **caractérisé en ce que** la plaque d'usure (11) est vissée au corps de base (3), dans lequel le vissage est effectué de manière préférée depuis le premier côté (7) du pied magnétique (1).

10. Pied magnétique (1) selon l'une quelconque des revendications 8 ou 9, **caractérisé en ce qu'**un côté, pointant de manière à s'éloigner du corps de base (3), de la plaque d'usure (11) présente une face supérieure sensiblement plane.

11. Pied magnétique (1) selon l'une quelconque des revendications 8 à 10, **caractérisé en ce qu'**une rainure (12) est réalisée dans le côté, pointant de manière à s'éloigner du corps de base (3), de la plaque d'usure (11), dans lequel la rainure (12) présente de manière préférée une forme prismatique.

12. Pied magnétique (1) selon la revendication 11, **caractérisé en ce que** la rainure (12) est orientée de manière symétrique par rapport à un axe longitudinal (13) du corps de base (3).

13. Pied magnétique (1) selon l'une quelconque des revendications 1 à 12, **caractérisé en ce que** l'au moins un indicateur d'usure (9) est formé en tant qu'un élément de capteur (14), qui est logé dans le pied magnétique (1).

14. Pied magnétique (1) selon la revendication 13, **caractérisé en ce qu'**est prévu un dispositif de mise hors service, qui désactive la machine-outil électrique (15) dans le cas d'un dépassement d'une limite d'usure pouvant être prédéfinie.

15. Machine-outil électrique (15) avec un pied magnétique (1) selon l'une quelconque des revendications 1 à 14.
